# EUROPEAN PATENT APPLICATION

(11) **EP 2 431 101 A1**
(43) Date of publication of application: **21.03.2012**
(21) Application number: 10177095.6
(22) Date of filing: 16.09.2010
(51) Int. Cl.: B05D 3/02, B05D 7/06, B05D 7/08, C09D 197/00

(54) **Method of working a workpiece with a coating of a lignin-derived substance, wooden element with a coating of such lignin-derived substance, and structures, interior or exterior, with such wooden element**

(71) Applicant: Tooling Invest A/S, 8600 Silkeborg (DK)
(72) Inventor: Hansen, Leif, DK-6973, Ørnhøj (DK)
(74) Representative: Boesen, Johnny Peder

(57) **Abstract**

The invention relates to a method for working a work piece made, at least partly, of a wooden material. The method comprises the steps of applying a coating of phenylpropanoid polymer such as calcium lignosulphonate to a surface of the wooden material. The coating of, e.g., calcium lignosulphonate is surplus to any phenylpropanoid polymer such as lignin present in the wooden material before applying the coating. The coating is worked for a period of time and/or at a thermal energy level resulting in the phenylpropanoid polymer being polymerized for obtaining a finished worked surface of the wooden material.

## Description

### FIELD OF THE INVENTION

The invention relates to a method for working a work piece made, at least partly, of a wooden material. The invention also relates to a wooden element being manufactured by working a wooden material of the wooden element. The invention furthermore relates to furniture, doors, panels, wall elements, ceiling elements or floor elements of buildings or vessels, with such wooden element.

### BACKGROUND OF THE INVENTION

Furniture made of wooden element such as furniture for kitchens, bedrooms and bathrooms are mostly made of wooden elements being painted, being provided with folio surface or being provided with a veneer surface or a combination of the mentioned different methods of covering surfaces of the wooden element as such.

Wooden elements being panels have surfaces, either a front cover side, or a rear cover side or edges. The surfaces, after a primary production step for producing of the wooden element as such, the elements may have a roughness which is too high for painting, folio surfaces coating or veneer surface coating. Therefore, the wooden elements must be worked at a secondary production step subsequent to primary production step, but preliminary to painting, folio surfaces coating or veneer surface coating. Such secondary production step necessitates increased handling and working of the wooden element, but may be needed in order obtain a front cover surface and/or a rear cover surface and/or edges being smooth enough for painting, folio surfaces coating or veneer surface coating.

### SUMMARY OF THE INVENTION

It is an object of the invention to provide a method reducing the need for handling of wooden elements, increasing the surface quality of the wooden elements and possibly increasing the aesthetic final appearance of the wooden element.

This object if obtained by a method comprising the steps of
- applying a coating of phenylpropanoid polymer to a surface of the wooden material, said coating being surplus to any phenylpropanoid polymer present in the wooden material before applying the coating,
- start working said coating of phenylpropanoid polymer for obtaining a frictional energy between a working tool and the coating of phenylpropanoid polymer, resulting in a heating of the coating of phenylpropanoid polymer,
- continue working said coating of phenylpropanoid polymer for a period of time and/or at a frictional force resulting in the phenylpropanoid polymer being heated to a temperature between 60 degrees Celsius and 200 degrees Celsius,
- end working said coating of phenylpropanoid polymer resulting in the coating of phenylpropanoid polymer hardening during polymerization for obtaining a finished worked surface of the wooden material.

A surplus coating of phenylpropanoid polymer such as calcium lignosulphonate on a surface of the wooden element, and subsequent heating, result in a surface roughness being at least a factor two better than the surface quality obtained if no surplus coating is applied. It is contradictory to apply, to a surface of the wooden material, a material already being present in the wooden material itself. There may be a need for the person skilled in the art to apply other materials not being present in the surface of the wooden material such as glue, a plastic coating or a priming for the finishing paint, but there is no need for a person skilled in the art to apply a material already being present in the surface of the wooden material.

According to an aspect of the method according to the invention, the wooden material is comprised in one of the following pieces of wooden materials: Low Density Fibreboard (LDF), Medium Density Fibreboard (MDF), High Density Fibreboard (HDF), solid wooden based materials, plant fibreboards, solid plant fibre-based materials. E.g., fibreboards of a certain density exhibit fibres extending from the exterior surfaces of the board. Such fibres result in the boards having a certain roughness which may cause difficulties in applying folio coatings or veneer coating, or which mat give the exterior surfaces of the board, if painted, a non-satisfactory aesthetic appearance because of the paint, depending on the colour of the paint, increasing the non-aesthetic appearance of the surfaces of the board. Applying the method according to the invention to such fibreboards results in a significant increase in the aesthetic appearance of the exterior surfaces.

According to an aspect of the method according to the invention,
- the step of applying a coating of phenylpropanoid polymer to the pre-worked surface of the wooden material is performed by applying a coating of phenylpropanoid polymer to a pre-finished surface,
- the step of working the surface is performed on the pre-finished surface, and said method comprising the further subsequent step of
- shaping the pre-finished surface by grinding, milling or other mechanical working of the surface, thereby obtaining a finished shape of the surface.

Different wooden elements may have different shapes along edge surfaces or panel surfaces. The shape of the wooden element may have details of a certain nature and/or the wooden element may have details of a certain small size. If that is the case, it may be difficult to obtain the final shape of the surface after having applied the additional coating an after the additional coating is polymerized. Subsequent mechanical working such as grinding or milling may ensure that a final shape of the surface is obtained. The subsequent working may result in only a fraction of the coated surface, e.g., only some few micrometers being grinded, milled or by any other mechanical working being abraded from the coating.

According to yet another aspect of the method according to the invention, the step of start working said coating of phenylpropanoid polymer for obtaining a thermal energy between a working tool and the coating of phenylpropanoid polymer is performed by a number of rollers engaging the surface of the wooden material, said rollers having a peripheral speed in relation to the surface, thereby obtaining a frictional heating of the surface. Frictional heating dissipated to the coating is one way of obtaining transfer of thermal energy to the coating of phenylpropanoid polymer. Use of frictional heating may eliminate the use of, e.g., electrical heating of the working tool.

According to yet another aspect of the method according to the invention, the step of start working said coating of phenylpropanoid polymer for obtaining a thermal energy between a working tool and the coating of phenylpropanoid polymer is performed by a number of heat exchanging surfaces such as rollers or rails engaging the coated surface of the wooden material, said rollers being heated, thereby obtaining a conduction heating of the surface. Conduction heating dissipated to the coating is one way of obtaining transfer of thermal energy to the coating of phenylpropanoid polymer. Use of conduction heating may eliminate the use of, e.g., frictional heating by the working tool. Alternatively or additionally to conduction heating by the rollers or rails engaging the coated surface of the wooden material, conduction heating may be applied by heated working tools such as rollers or rails passing the coated surface of the wooden material, but without the heated elements engaging the coated surface.

In an embodiment of the method according to the invention, both frictional heating and conduction heating is used for polymerization of the coating of phenylpropanoid polymer. Thus, the advantages of frictional heating and the advantages of conduction heating are combined. The degree of frictional heating in relation to the degree of conduction heating may be controlled depending on the wooden material, the coating polymer, the intended surface quality of the wooden material end possible other parameters of the method or of the finished product.

According to still another aspect of the method according to the invention, the step of continue working said coating of phenylpropanoid polymer for a period of time and/or at a frictional force is performed at a temperature between 60 degrees Celsius and 200 degrees Celsius, preferably at a temperature between 90 degrees Celsius and 120 degrees Celsius. The temperature intervals mentioned ensure a polymerization of the coating of phenylpropanoid polymer being obtained to a certain level of polymerization and being obtained within a certain period of time.

According to still yet another aspect of the method according to the invention, the step of end working said coating of phenylpropanoid polymer is performed when the coating of phenylpropanoid polymer has been polymerized, thereby obtaining a surface where at least the coating of phenylpropanoid polymer, possibly together with any phenylpropanoid polymer in the surface of the wooden material, as obtained a hardness of at least two times the hardness of the surface of wooden material before coating and polymerization of the phenylpropanoid polymer, preferably a hardness of at least three times between the hardness of the surface of wooden material before coating and polymerization of the phenylpropanoid polymer.

Alternatively or additionally to applying a coating of phenylpropanoid polymer, an aqueous lignin solution of one or more cross-linking agents may be added in an amount of 1 mole to 10 moles of formaldehyde per 1,000 grams of lignin. The cross-linking agent may be formaldehyde or a formaldehyde-forming material selected from the group consisting of paraformaldehyde, glyoxal, glutaric dialdehyde and combinations of glutaric dialdehyde and epichlorohydrin. The solution is heated to a temperature between 10 degrees Celsius and 100 degrees Celsius, preferably between 80 degrees Celsius and 95 degrees Celsius to perform the cross-linking reaction. The reaction is carried out until cross-linking occurs to the point where a certain increase in viscosity takes place, possibly a reaction time of 4 to 12 hours.

When glyoxal or glutaric dialdehyde is the cross-linking agent, it is possible to add from 0.1 moles to 5 moles per 1,000 grams of lignin of epichlorohydrin to the reaction after, e.g., 4 to 6 hours have elapsed to assist in forming the insoluble gel. Lignins thus treated form water-insoluble so-called re-swellable gels with the amount of so-called re-swellability being greatest with glutaric dialdehyde and progressively somewhat lower with glyoxal and formaldehyde, respectively.

### EXAMPLE

An MDF panel having a density of approximately 760 kg per cubic meter is pre-worked along an edge surface of the panel, thereby obtaining a surface roughness Ra of approximately 2,5. A coating of calcium lignosulphonate is applied to the edge surface. One or more rollers are forced against the edge surface, said rollers having a peripheral speed in relation to the edge surface of the MDF panel of approximately 15-20 meters per second. In the example, the rollers are not heated, only friction heating is conducted to the coated surface. The one or more rollers may however be heated to a temperature of ,e.g., at least 50 degrees Celsius, said temperature being measured by not taking into account any heating incurred due to possible friction. The edge surface is worked for a period of time of corresponding to a through feed of 6-8 meters per second of the coated surface past the one or more rollers. When working of the edge surface is ended, the coating of calcium lignosulphonate is polymerized, and a finished edge surface is obtained.

The average surface roughness Rₐ of the edge surface having been worked according to the method of the invention and with parameters as mentioned in the example is 0.553. The average surface roughness Rₐ of an edge surface not having been worked according to the method of the invention and also with parameters as mentioned in the example is 2.652. Thus, a decrease in surface roughness of approximately five times is obtained by the method according to the invention.

If the shape of the finished edge surface is not the intended final shape of the edge surface - during use of a wooden element made from the wooden material - a subsequent mechanical working such as grinding, milling or other mechanical working may be applied to the edge surface for obtaining the final intended shape of the edge surface.

In the example disclosed, calcium lignosulphonate is used as a coating additional to any phenylpropanoid polymer or lignin in the wooden material itself. In other applications of the method according to the invention and for other wooden elements and possible furniture obtained by the method according to the invention, other substances than calcium lignosulphonate may be used.

And, in the example disclosed, an MDF panel having a density of 760 kg per cubic-meter is used. In other applications, other wooden materials may be used, such as HDF or LDF of certain density, or such as solid wooden materials or other plant fibre based materials.

Also, in the example disclosed, an edge surface of the panel is worked. In other application, the panel surface may additionally or alternatively be worked by the method according to the invention. The method of the invention may be applied to different wooden structures, wooden interior or wooden exterior such as indoor or outdoor furniture, indoor or outdoor doors, panels, wall elements, ceiling elements or floor elements of buildings such as domestic buildings, office buildings or industrial buildings. The method may also be applied to wooden elements of vessels such as wooden interior of a car, a train, a ship, a boat or an aeroplane, or wooden exterior of a vessel such as railings or decks of a ship or a boat.

## Claims

1. A method for working a work piece made, at least partly, of a wooden material, said method comprising the steps of
- applying a coating of phenylpropanoid polymer to a surface of the wooden material, said coating being surplus to any phenylpropanoid polymer present in the wooden material before applying the coating,
- start working said coating of phenylpropanoid polymer for obtaining a transfer of thermal energy from a working tool to the coating of phenylpropanoid polymer, resulting in a heating of the coating of phenylpropanoid polymer,
- continue working said coating of phenylpropanoid polymer for a period of time and/or at a thermal energy level resulting in the phenylpropanoid polymer being heated to a temperature between 60 degrees Celsius and 200 degrees Celsius,
- end working said coating of phenylpropanoid polymer resulting in the coating of phenylpropanoid polymer hardening during polymerization for obtaining a finished worked surface of the wooden material.

2. A method according to claim 1, where the phenylpropanoid polymer is selected from the group consisting of p-hydroxyphenyl, guaiacyl, syringal and combinations thereof.

3. A method according to claim 2, where the phenylpropanoid polymer is a substance derived from lignin, and where the substance possibly derived from the group consisting of sulphur containing lignin and sulphur free lignin.

4. A method according to claim 4, wherein the sulphur containing lignin is selected from the group consisting of lignosulphonate such as sodium lignosulphonate, calcium lignosulphonate, ammonium lignosulphonate, aluminium lignosulphonate.

5. A method according to any of claims 1-4, where the wooden material is comprised in one of the following elements of wooden materials: Low Density Fibreboard (LDF), Medium Density Fibreboard (MDF), High Density Fibreboard (HDF).

6. A method according to any of claims 1-5, where the step of start working said coating of phenylpropanoid polymer for obtaining a thermal energy transfer between a working tool and the coating of phenylpropanoid polymer is performed by a number of rollers engaging the surface of the wooden material, said rollers having a peripheral speed in relation to the surface, thereby obtaining a frictional heating of the surface.

7. A method according to any of claims 1-5, where the step of start working said coating of phenylpropanoid polymer for obtaining a thermal energy transfer between a working tool and the coating of phenylpropanoid polymer is performed by a number of heat exchanging surfaces such as rollers or rails engaging or passing, without engaging, the surface of the wooden material, said rollers being heated, thereby obtaining a conduction heating of the surface.

8. A method according to any of claim 1-7, where the step of continue working said coating of phenylpropanoid polymer for a total period of time, said total period of time being combined by a first period of time until the coating has obtained a certain temperature, a period of time until said certain temperature has prevailed in the coating of phenylpropanoid polymer at a empirically determined period of time, and said certain temperature being at least 60 degrees Celsius, and said empirically determined period of time being until the phenylpropanoid polymer is polymerized at least at a certain distance from a surface of the coating and into the coating towards the wooden material having been coated, said distance preferably being 100% of the coating.

9. A method according to any of claims 1-8, where the step of end working said coating of phenylpropanoid polymer is performed when the phenylpropanoid polymer is polymerized at least at a certain distance from a surface of the coating and into the coating towards the wooden material having been coated, said distance preferably being 100% of the coating.

10. A wooden element being manufactured by working a wooden material by the method according to any of claim 1-10, said wooden element having a coating of phenylpropanoid polymer at a surface of the wooden element, said coating of phenylpropanoid polymer constituting a finished surface of the wooden element, and said coating of phenylpropanoid polymer having a volumetric content of phenylpropanoid polymer being higher than a volumetric content of phenylpropanoid polymer in the wooden material.

11. A wooden element according to claim 10, where an average roughness Ra of the surface of the wooden element, subsequent to the coating of phenylpropanoid polymer having hardened, is at the most 2.5, possibly at the most 1.0.

12. A wooden element according to claim 10 or 11, where an average thickness of the coating of phenylpropanoid polymer, subsequent to the coating of phenylpropanoid polymer having hardened, is at the most 100 micrometers, possibly at the most 20 micrometers.

13. A wooden element according to any of claims 10-12, where the wooden element constitutes one of the following pieces of wooden elements: Low Density Fibre (LDF) panel, Medium Density Fibre (MDF) panel, High Density Fibre (HDF) panel.

14. A structure, an interior or an exterior such as furniture, doors, panels, wall elements, ceiling elements or floor elements of buildings or vessels, said structure, interior or exterior comprising at least one wooden element according to any of claims 10-13, and said building structure having a front, a rear, a top or a bottom, and said front, rear, top or bottom of the furniture being made of said wooden element.

15. A structure, an interior or an exterior according to claim 14, said building structure having at least one surface constituting at least part of the front of said building structure, and said at least one surface being made of said wooden element, and said at least one surface having at least one edge being worked by the method according to any of claims 1-9.
